# EUROPEAN PATENT APPLICATION

(11) **EP 2 709 302 A1**
(43) Date of publication of application: **19.03.2014**
(21) Application number: 12781845.8
(22) Date of filing: 27.04.2012
(51) Int. Cl.: H04J 99/00, H04B 7/04, H04W 16/28

(54) **MOBILE STATION DEVICE, COMMUNICATION METHOD, AND COMPUTER PROGRAM**

(30) Priority: 10.05.2011 JP 2011105495
(71) Applicant: NEC CASIO Mobile Communications, Ltd., Kawasaki-shi Kanagawa 211-8666 (JP); NTT DOCOMO, INC., Chiyoda-ku Tokyo 100-6150 (JP)
(72) Inventor: SHIMANUKI, Noriyuki, Kawasaki-shi, Kanagawa 211-8666 (JP)
(74) Representative: Vossius & Partner
(86) International application number: PCT/JP2012/061387
(87) International publication number: WO 2012/153658

(57) **Abstract**

A mobile station device, a communication method, and a computer program in which effective beam-forming can be performed without an increase in power consumption are provided. The mobile station device: calculates a channel capacity of a representative precoding matrix index (PMI) for each PMI group; sorts the PMI groups in the sequence of the PMI channel capacity; compares the previous sort sequence and the current sort sequence to thereby determine a PMI group for which a channel capacity of a PMI other than the representative PMI is calculated; calculates the channel capacity of a PMI other than the representative PMI, from among the PMIs in the PMI group that has been determined; and selects as a PMI estimation value the PMI for which the largest channel capacity has been calculated.

## Description

### {Technical Field}

The present invention relates to a mobile station device, a communication method and a computer program.

### {Background Art}

In a mobile communication system which uses multilayer transmission such as LTE (Long Term Evolution), beam forming is applied by, when a base station performs transmission with respect to a mobile station, performing precoding processing based on a codebook.

That is, in the mobile communication system which uses multilayer such as LTE, beam forming is realized by, when a base station performs transmission with respect to a mobile station, performing processing called "precoding processing." When the base station can optimally perform precoding processing, the mobile station can receive maximum received power and it is also possible to minimize interference on other mobile stations.

According to LTE, closed loop processing is adopted in which, by estimating an optimal precoding matrix based on a known signal and notifying the optimal precoding matrix to a base station through an uplink transmission channel, a mobile station performs precoding processing. Meanwhile, complicated calculation is required to estimate an optimal precoding matrix, and therefore a method which is based on a codebook and which performs beam forming by defining a plurality of precoding matrices in advance (by adding an index to each defined precoding matrix to specify as a precoding matrix index (PMI)) and selecting a PMI therefrom.

Conventionally, a user device in a mobile communication system according to a multi input multi output (MIMO) system which uses precoding has: a PMI generating unit which generates precoding matrix indicators (PMI) which indicate precoding matrices which need to be used by a base station, according to a radio propagation situation; a delay circuit which receives an input of the PMIs and outputs these PMIs after a predetermined delay time passes; a storage unit which receives the PMIs from the delay circuit and stores the input PMIs; and a channel estimation unit which performs channel estimation on a signal from the base station using the PMIs stored in the storage unit (see, for example, the patent literature PTL 1).

### {Citation List}

### {Patent Literature}

{PTL 1} JP 2009-164975 A

### {Summary of Invention}

### {Technical Problem}

However, to effectively perform beam forming by precoding processing based on a codebook, a mobile station needs to accurately estimate a channel capacity of each PMI included in the codebook and therefore power consumption related to estimation processing of the mobile station increases in proportion to the number of PMIs in the codebook.

That is, in case of precoding processing based on a codebook, if a mobile station can accurately estimate an optimal precoding matrix, a higher gain can be obtained when the number of precoding matrices (the number of PMIs) defined in the codebook is higher, and therefore defining a greater number of precoding matrices is more advantageous in terms of performance. However, when the number of precoding matrices defined in the codebook is higher, an operation amount related to estimation processing of the mobile station increases in proportion to the number of precoding matrices, and therefore higher power consumption is required.

Meanwhile, when the number of PMIs defined in the codebook is limited, beam patterns which can be formed are narrowed and therefore beams cannot be effectively formed for all channels.

It is therefore an object of the present invention to provide a mobile station device, a communication method and a computer program which can solve the above problem, that is, effectively form beams without increasing power consumption.

### {Solution to Problem}

In order to solve the above problem, according to a first aspect of the present invention, there is provided a mobile station device comprising: a first calculation means of calculating for each of precoding matrix index groups consisting of a predetermined number of precoding matrix indices a channel capacity of a representative precoding matrix index which is a precoding matrix index representing the precoding matrix index group; a sorting means of sorting the precoding matrix index groups in order of the channel capacity of the representative precoding matrix index; a storage means which stores rank orders of the precoding matrix index groups sorted in order of the channel capacity; a determining means of determines a precoding matrix index group in which channel capacities of precoding matrix indices other than the representative precoding matrix index are to be calculated, by comparing a rank order of a precoding matrix index group which is stored in the storage means and is obtained upon previous precoding processing, and a rank order of a precoding matrix index group which is obtained upon current precoding processing; a second calculation means of calculating the channel capacities of the precoding matrix indices other than the representative precoding matrix index among the precoding matrix indices of the precoding matrix index group in which the channel capacities of the precoding matrix indices other than the representative precoding matrix index are determined by the determining means to be calculated; and a selecting means of selecting as a precoding matrix index estimate the representative precoding matrix index or the precoding matrix indices from which the maximum channel capacity is calculated, from the representative precoding matrix index or the precoding matrix indices whose communication capacity is calculated by the first calculation means or the second calculation means.

According to a second aspect of the present invention, there is provided a communication method comprising: a first calculation step of calculating for each of precoding matrix index groups which each comprise a predetermined number of precoding matrix indices a channel capacity of a representative precoding matrix index which is a precoding matrix index representing each precoding matrix index group; a sorting step of sorting the precoding matrix index groups in order of the channel capacity of the representative precoding matrix index; a storage step of storing rank orders of the precoding matrix index groups sorted in order of the channel capacity in a storage means; a determining step of, by comparing a rank order of a precoding matrix index group which is stored in the storage means and is obtained upon previous precoding processing, and a rank order of a precoding matrix index group which is obtained upon current precoding processing, determining the precoding matrix index group in which channel capacities of precoding matrix indices other than the representative precoding matrix index are to be calculated; a second calculation step of, among the precoding matrix indices of the precoding matrix index group in which the channel capacities of the precoding matrix indices other than the representative precoding matrix index are determined in the determining step to be calculated, calculating the channel capacities of the precoding matrix indices other than the representative precoding matrix index; and a selecting step of selecting as a precoding matrix index estimate the representative precoding matrix index or the precoding matrix indices from which the maximum channel capacity is calculated, from the representative precoding matrix index or the precoding matrix indices whose communication capacity is calculated in the first calculation step or the second calculation step.

According to a third aspect of the present invention, there is provided a computer program causing a computer program causing a computer to execute processing comprising: a first calculation step of calculating for each of precoding matrix index groups which each comprise a predetermined number of precoding matrix indices a channel capacity of a representative precoding matrix index which is a precoding matrix index representing each precoding matrix index group; a sorting step of sorting the precoding matrix index groups in order of the channel capacity of the representative precoding matrix index; a storage step of storing rank orders of the precoding matrix index groups sorted in order of the channel capacity in a storage means; a determining step of, by comparing a rank order of a precoding matrix index group which is stored in the storage means and is obtained upon previous precoding processing, and a rank order of a precoding matrix index group which is obtained upon current precoding processing, determining the precoding matrix index group in which channel capacities of precoding matrix indices other than the representative precoding matrix index are to be calculated;
a second calculation step of, among the precoding matrix indices of the precoding matrix index group in which the channel capacities of the precoding matrix indices other than the representative precoding matrix index are determined in the determining step to be calculated, calculating the channel capacities of the precoding matrix indices other than the representative precoding matrix index; and a selecting step of selecting as a precoding matrix index estimate the representative precoding matrix index or the precoding matrix indices from which the maximum channel capacity is calculated, from the representative precoding matrix index or the precoding matrix indices whose channel capacity is calculated in the first calculation step or the second calculation step.

### {Advantageous Effects of Invention}

According to the present invention, it is possible to provide a mobile station device, a communication method, and a computer program which can effectively form beams without increasing power consumption.

### {Brief Description of Drawings}

Fig. 1 is a block diagram illustrating an example of a configuration of a mobile station.
Fig. 2 is a block diagram illustrating an example of a configuration of a channel state information estimation unit.
Fig. 3 is a view illustrating an example of a codebook.
Fig. 4 is a flowchart for explaining processing of generating PMI ranking information, PMI group division information and each group representative PMI selection information.
Fig. 5 is a view illustrating an example of a channel capacity of each PMI.
Fig. 6 is a view illustrating an example of a PMI rank.
Fig. 7 is a view illustrating an example of a representative PMI.
Fig. 8 is a flowchart for explaining processing of narrowing PMIs whose channel capacities are calculated.
Fig. 9 is a view illustrating an example of a channel capacity of a representative PMI and a rank order of each group.
Fig. 10 is a view illustrating an example of a PMI estimate.
Fig. 11 is a block view illustrating a configuration example of hardware of a computer.

### {Description of Embodiments}

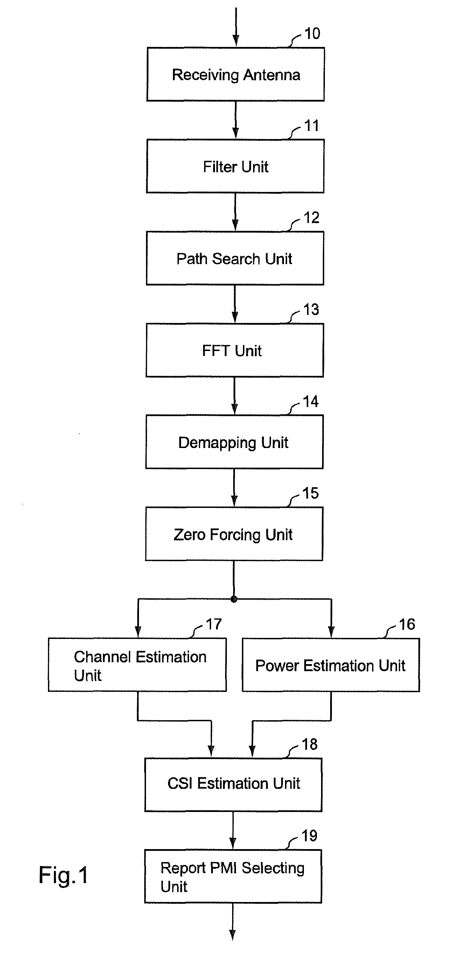

Hereinafter, a mobile station device according to an embodiment of the present invention will be described with reference to Figs. 1 to 11 using an example where downlink signal reception processing is applied to a mobile station which supports LTE.

Fig. 1 is a block diagram illustrating an example of a configuration of a mobile station according to the embodiment of the present invention.

This mobile station comprises a receiving antenna 10, a filter unit 11, a path search unit 12, an FFT (fast Fourier transform) unit 13, a demapping unit 14, a zero forcing unit 15, a power estimation unit 16, a channel estimation unit 17, a CSI (channel state information) estimation unit 18 and a report PMI selecting unit 19.

A signal received at the receiving antenna 10 is supplied to the filter unit 11. The filter unit 11 which is an analog or digital filter extracts desired frequency components, and supplies the frequency components to the path search unit 12.

The path search unit 12 specifies path timing. The FFT unit 13 expands a signal in a frequency domain, and obtains a plurality of subcarriers.

The demapping unit 14 specifies subcarriers on which a reference signal which is a known signal is mapped and subcarriers on which a data signal is mapped, among subcarriers expanded in the frequency domain.

The zero forcing unit 15 applies zero forcing (ZF) processing to the reference signal extracted by the demapping unit 14 to cancel phase fluctuation the known signal suffered in a channel.

The power estimation unit 16 estimates noise power and signal power using a signal subjected to zero forcing. The channel estimation unit 17 calculates a channel estimate using the signal subjected to zero forcing.

The CSI estimation unit 18 estimates channel state information including PMIs using the noise power, the signal power and the channel estimate obtained by previous processing. The report PMI selecting unit 19 selects as a PMI estimate a PMI to which a maximum channel capacity among channel capacities of PMIs finally calculated per layer is allocated.

Next, the CSI estimation unit 18 will be described in detail.

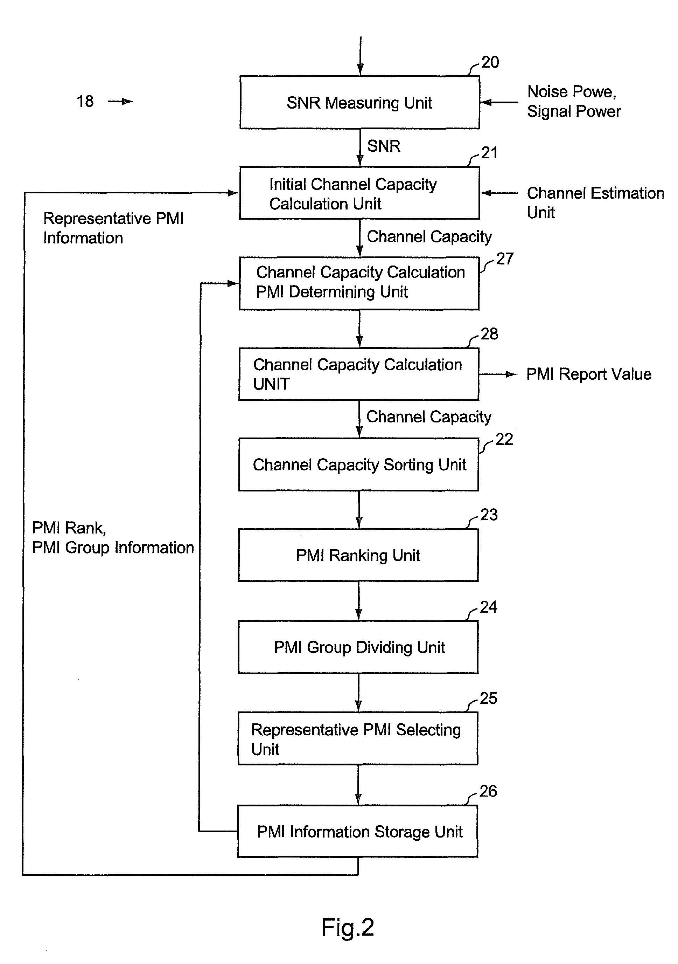

Fig. 2 is a block diagram illustrating an example of a configuration of the CSI estimation unit 18. The CSI estimation unit 18 has an SNR (signal to noise ratio) measuring unit 20, an initial channel capacity calculation unit 21, a channel capacity sorting unit 22, a PMI ranking unit 23, a PMI group dividing unit 24, a representative PMI selecting unit 25, a PMI information storage unit 26, a channel capacity calculation PMI determining unit 27 and a channel capacity calculation unit 28.

The SNR measuring unit 20 calculates a signal to noise ratio from noise power and signal power.

The initial channel capacity calculation unit 21 calculates a channel capacity using the SNR and the channel estimate per PMI. In this case, the initial channel capacity calculation unit 21 calculates a channel capacity required to calculate a PMI by estimating a channel state from a past channel capacity measurement result to calculate a channel capacity of only a PMI to which a maximum channel capacity among PMIs included in a codebook is highly likely to be allocated, and suppress power consumption related to estimation.

The channel capacity sorting unit 22 rearranges channel capacities of PMIs in ascending order. The PMI ranking unit 23 ranks each PMI in the codebook based on the channel capacities rearranged in ascending order.

The PMI group dividing unit 24 classifies PMIs into a plurality of groups based on ranking results. The representative PMI selecting unit 25 selects one or more representative PMIs from PMIs included in each group. The PMI information storage unit 26 stores PMI ranking information obtained by the PMI ranking unit 23, PMI group division information obtained by the PMI group dividing unit 24 and each group representative PMI selection information obtained by the representative PMI selecting unit 25.

The channel capacity calculation PMI determining unit 27 and the channel capacity calculation unit 28 estimate a current channel state from a previous estimation result and a channel capacity of a current representative PMI, and determine PMIs whose channel capacities are calculated.

In addition, when a PMI is estimated for the first time, previous estimation timing information cannot be used, and therefore the initial channel capacity calculation unit 21 calculates channel capacities of all PMIs without using the information obtained by the PMI information storage unit 26.

Thus, a PMI to which a maximum channel capacity among channel capacities obtained by the channel capacity calculation unit 28 is allocated is specified as a PMI to be reported in an uplink channel, is mapped on the uplink channel by the report PMI selecting unit 19 and is reported to a base station.

Next, a PMI estimating operation upon reception of a downlink signal of a mobile station which supports LTE will be described as an example. Processing in case of closed loop (transmission mode 6) of rank 2 according to an antenna configuration which includes four transmitting antennas and two receiving antennas in downlink of LTE will be described as an example.

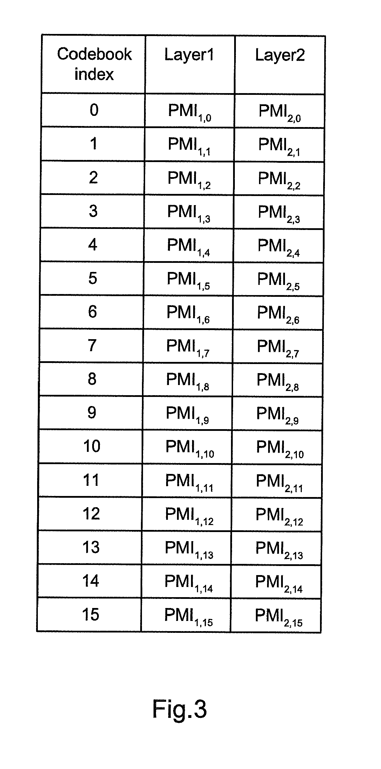

Fig. 3 is a view illustrating an example of a codebook. Using a reference signal which is a known signal, the mobile station needs to calculate a channel capacity of each PMI to estimate from the codebook illustrated in Fig. 3 one PMI which provides high received power of transmission data addressed to this mobile station and which minimizes interference on other stations.

As illustrated in Fig. 3, codebook indices 0 to 15 correspond to PMI1,0 to PMI1,15 in layer 1, and correspond to PMI2,0 to PMI2,15 in layer 2.

First, the SNR measuring unit 20 calculates an SNR in a bandwidth (subband) whose report is required, based on noise power and signal power. Next, the initial channel capacity calculation unit 21 calculates a channel capacity of each PMI included in the codebook per report subband unit using the SNR and channel estimates of subcarriers included in the subband.

The channel capacity calculation unit 28 calculates channel capacities of all of 32 PMIs included in the codebook as usual when there is no previous estimation information, that is, at the initial estimation timing.

When the estimation timing is not the first one, PMIs whose communication capacities are calculated are narrowed referring to each information of "PMI groups", a "PMI rank" and "representative PMIs" from the PMI information storage unit 26.

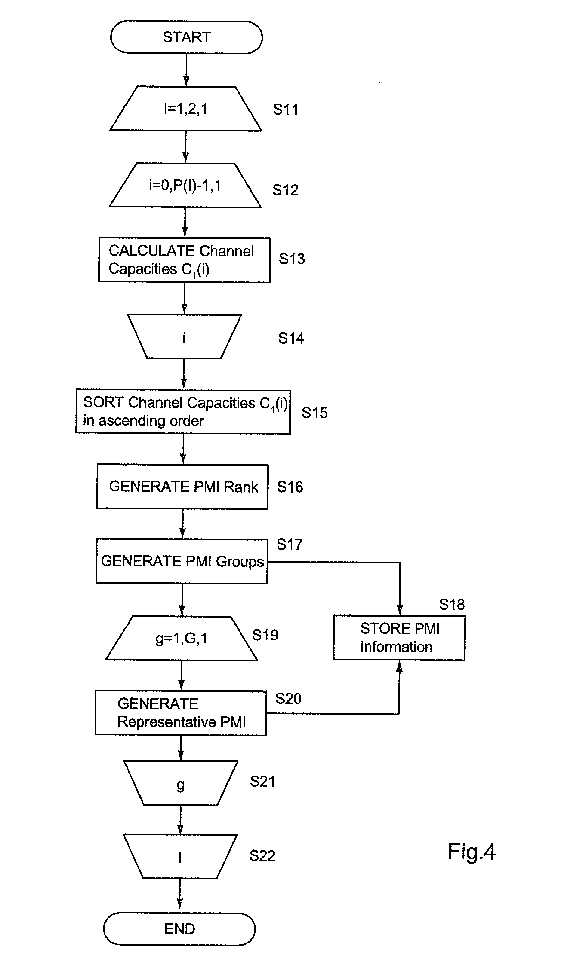

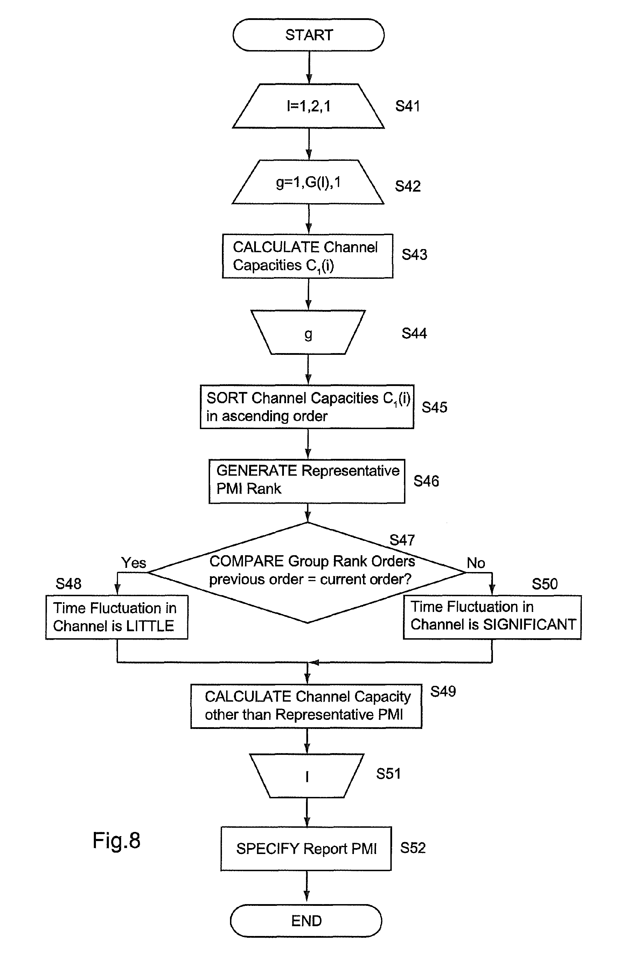

First, an operation of generating each information stored in the PMI information storage unit 26 (processing of generating PMI ranking information, PMI group division information and each group representative PMI selection information) will be described using the flowchart in Fig. 4. In addition, processing of specifying a PMI of a channel capacity calculation target referring to respective information will be described below with reference to a flowchart in Fig. 8.

In step S11 and step S22, the channel state information estimation unit 18 increments a variable I by one at a time while taking one as an initial value of the variable I indicating a layer, and repeats processing in steps S12 to step S21 until the variable *l* becomes two.

In step S12 and step S14, the initial channel capacity calculation unit 21 increments a variable i by one at a time while taking zero as an initial value of the variable i indicating an index, and repeats processing in step S13 until the variable i becomes **P(*l*)-1.** Meanwhile, P is the number of codebook indices.

In step S13, the initial channel capacity calculation unit 21 calculates channel capacities **C*₁*(i)** of PMIs per layer #1.

In step S15, the channel capacity sorting unit 22 sorts the calculated channel capacities C*ₗ*(i) of PMIs per layer #1 in ascending order to rearrange PMIs in order of larger channel capacities. In step S16, the PMI ranking unit 23 provides this rearrangement order as a "PMI rank."

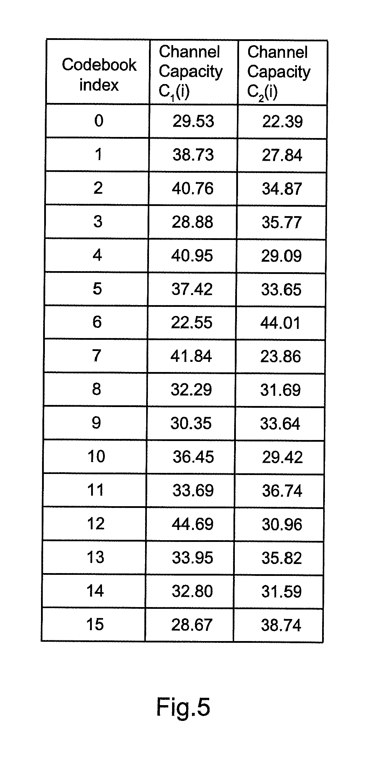

For example, in step S 15, it is assumed that the channel capacity sorting unit 22 calculates a channel capacity per PMI as illustrated in Fig. 5. That is, for PMI1,0 to PMI1,15, channel capacities of 29.53, 38.73, 40.76, 28.88, 40.95, 37.42, 22.55, 41.84, 32.29, 30.35, 36.45, 33.69, 44.69, 33.95, 32.80 and 28.67 are calculated, and, for PMI2,0 to PMI2,15, channel capacities of 22.39, 27.84, 34.87, 35.77, 29.09, 33.65, 44.01, 23.86, 31.69, 33.64, 29.42, 36.74, 30.96, 35.82, 31.59 and 38.74 are calculated.

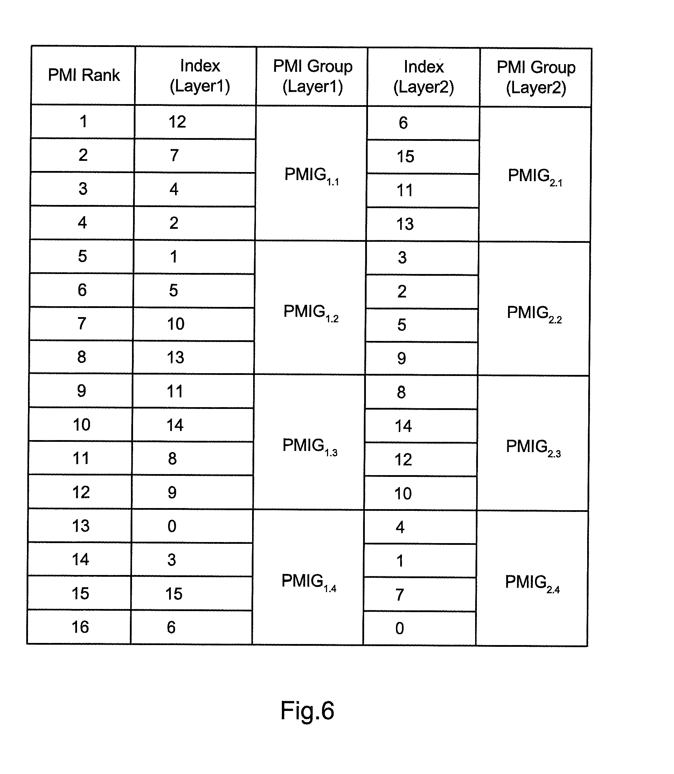

In this case, in step S16, the PMI rank is obtained as illustrated in Fig. 6. That is, PMI rank indices 1 to 16 are 12, 7, 4, 2, 1, 5, 10, 13, 11, 14, 8, 9, 0, 3, 15 and 6 in layer 1, and are 6, 15, 11, 13, 3, 2, 5, 9, 8, 14, 12, 10, 4, 1, 7, 0 in layer 2.

In step S17, the PMI group dividing unit 24 creates G(*l*) PMI group" PMIG_{*l*,g} based on the PMI rank. Each group includes t_{g}(*l*) PMIs. Fig. 6 illustrates an example of group division in case of G(*l* = 1) = 4 and G(*l* = 2) = 4.

That is, a PMI group PMIG₁,₁ includes PMIs of the indices 12, 7, 4 and 2, a PMI group PMIG_{1,2} includes PMIs of the indices 1, 5, 10 and 13, a PMI group PMIG_{1,3} includes PMIs of the indices 11, 14, 8 and 9, and a PMI group PMIG_{1,4} includes PMIs of the indices 0, 3, 15 and 6. Similarly, a PMI group PMIG_{2,1} includes PMIs of the indices 6, 15, 11 and 13, a PMI group PMIG_{2,2} includes PMIs of the indices 3, 2, 5 and 9, a PMI group PMIG_{2,3} includes PMIs of the indices 8, 14, 12 and 10 and a PMI group PMIG_{2,4} includes PMIs of the indices 4, 1, 7 and 0.

In step S18, the PMI information storage unit 26 stores the generated "PMI groups" (PMI ranking information and PMI group division information).

In step S19 and step S21, the representative PMI selecting unit 25 increments a variable g by 1 at a time while taking 1 as an initial value of the variable g indicating a PMI group, and repeats processing in step S20 until the variable g becomes G. Meanwhile, G is the number of PMI groups. In step S20, the representative PMI selecting unit 25 generates for each PMI group s_{g} "representative PMIs" from tg PMIs included in a PMI group (where s_{g} is tg or less).

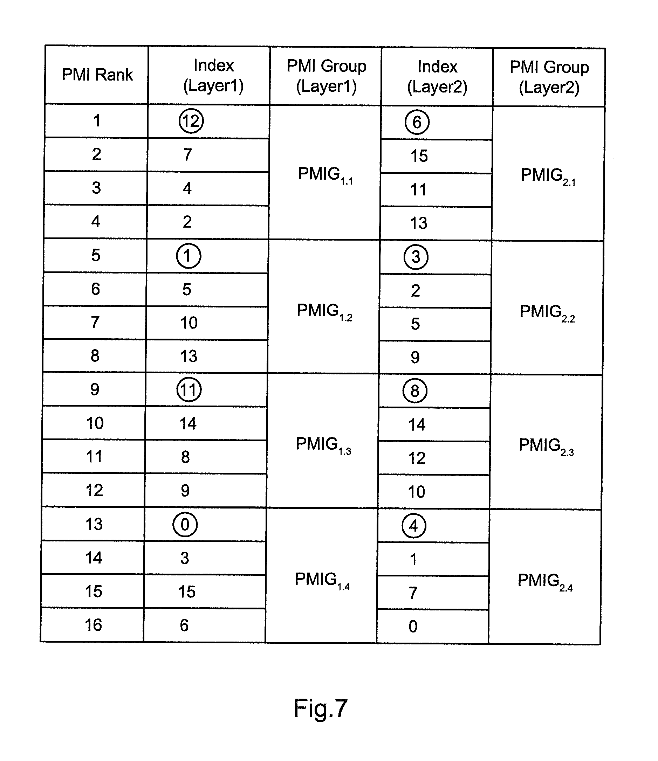

Fig. 7 illustrates an example where a PMI of the highest PMI rank in each group is selected as a representative PMI in case of s_{g} = 1. In Fig. 7, PMIs surrounded by circles are representative PMIs. That is, an index of a representative PMI of the PMI group PMIG_{1,1} is 12, an index of a representative PMI of the PMI group PMIG_{1,2} is 1, an index of a representative PMI of the PMI group PMIG_{1,3} is 11, and an index of a representative PMI of the PMI group PMIG_{1,4} is 0. Further, an index of a representative PMI of the PMI group PMIG_{2,1} is 6, an index of a representative PMI of the PMI group PMIG_{2,2} is 3, an index of a representative PMI of the PMI group PMIG_{2,3} is 8 and an index of a representative PMI of the PMI group PMIG_{2,4} is 4.

In step S18, the PMI information storage unit 26 stores the generated "representative PMIs" (respective group representative PMI selection information).

After respective group representative PMI selection information is stored in the PMI information storage unit 26, processing of generating PMI ranking information, PMI group division information and each group representative PMI selection information is finished.

The "PMI groups" and the "representative PMIs" (PMI ranking information, PMI group division information and respective group representative PMI selection information) stored in the PMI information storage unit 26 are referred to at the next estimation timing.

Next, processing of reading PMI information from the PMI information storage unit 26 at the next estimation timing (next subframe) and narrowing PMIs whose channel capacities are calculated will be described with reference to the flowchart in Fig. 8.

In step S41 and step S51, the channel state information estimation unit 18 increments the variable 1 by 1 at a time while taking 1 as an initial value of the variable 1 indicating a layer, and repeats processing in step S42 to step S50 until the variable I becomes 2.

In step S42 and step S44, the initial channel capacity calculation unit 21 increments the variable g by one at a time while taking one as an initial value of the variable g indicating a PMI group, and repeats processing in step S43 until the variable g becomes G(*l*). Meanwhile, G(*l*) is the number of PMI groups in layer 1.

In step S43, the initial channel capacity calculation unit 21 calculates a channel capacity of only a representative PMI of each PMI group. That is, for example, the initial channel capacity calculation unit 21 calculates channel capacities of only s_{g}*G representative PMIs illustrated in Fig. 7.

In step S45, the channel capacity calculation PMI determining unit 27 arranges values of channel capacities of representative PMIs of groups in ascending order per layer, and generates rank orders of the groups to which the representative PMIs belong.

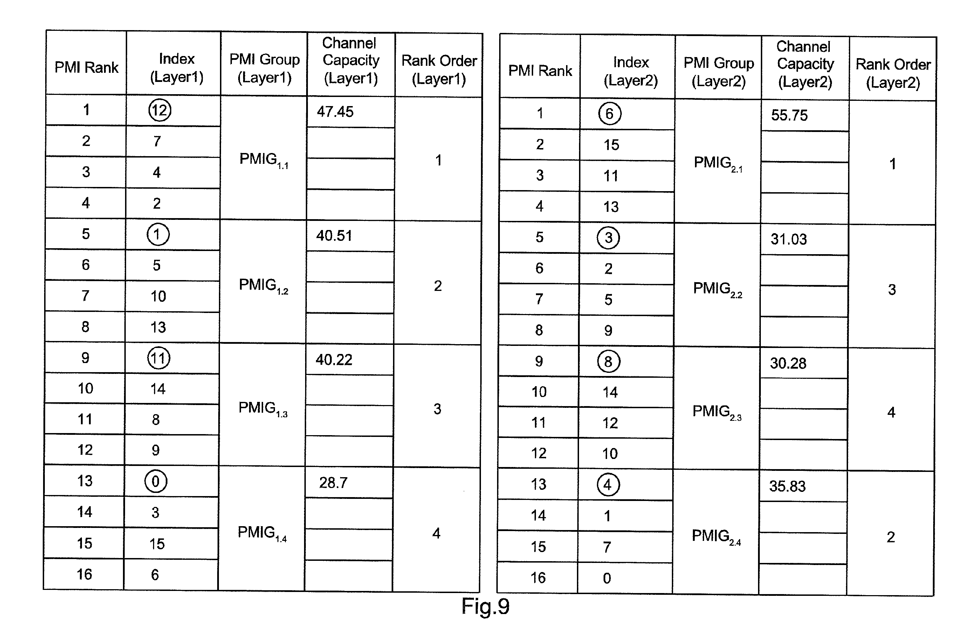

For example, the channel capacity of a representative PMI and the rank order of each group are calculated as illustrated in Fig. 9. That is, a channel capacity of 47.45 is calculated for the representative PMI of the index 12 in the PMI group PMIG_{1,1}, the channel capacity of 40.51 is calculated for the representative PMI of the index 1 in the PMI group PMIG_{1,2}, the channel capacity of 40.22 is calculated for the representative PMI of the index 11 in the PMI group PMIG_{1,3} and the channel capacity of 28.7 is calculated for the representative PMI of the index 0 in the PMI group PMIG_{1,4}. A rank order of the PMI group PMIG_{1,1} is 1, a rank order of the PMI group PMIG_{1,2} is 2, a rank order of the PMI group PMIG_{1,3} is 3 and the rank order of the PMI group PMIG_{1,4} is 4.

Similarly, the channel capacity of 55.75 is calculated for the representative PMI of the index 6 in the PMI group PMIG_{2,1}, the channel capacity of 31.03 is calculated for the representative PMI of the index 3 in the PMI group PMIG_{2,2}, the channel capacity of 30.28 is calculated for the representative PMI of the index 8 in the PMI group PMIG_{2,3}, and the channel capacity of 35.83 is calculated for the representative PMI of the index 4 in the PMI group PMIG_{2,4}. A rank order of the PMI group PMIG_{2,1} is 1, a rank order of the PMI group PMIG_{2,2} is 3, a rank order of the PMI group PMIG_{2,3} is 4 and a rank order of the PMI group PMIG_{2,4} is 2.

In step S47, by comparing rank orders of "PMI groups" stored in the PMI information storage unit 26 and the rank orders of groups based on channel capacities of representative PMIs calculated at the current estimation timing, the channel capacity calculation PMI determining unit 27 estimates a fluctuation situation of a channel and determines PMIs whose channel capacities need to be calculated in addition to the representative PMIs.

In step S47, when the rank orders of the groups based on the channel capacities of the representative PMIs calculated at the current estimation timings are the same as previous rank orders, a flow proceeds to step S48, and the channel capacity calculation PMI determining unit 27 decides that fluctuation in the channel is little. In this case, in step S49, the channel capacity calculation unit 28 calculates channel capacities of only PMIs included in the PMI groups placed at upper places at the previous estimation timing.

In step S47, when it is determined that rank orders of groups based on channel capacities of representative PMIs calculated at the current estimation timings are not the same as previous rank orders, the flow proceeds to step S50, and the channel capacity calculation PMI determining unit 27 determines that fluctuation in a channel is significant. Subsequently, the flow proceeds to step S49 and, in this case, the channel capacity calculation unit 28 calculates a channel capacity of each PMI without narrowing PMIs.

When rank orders of PMI groups at the previous estimation timing and rank orders of PMI groups obtained at the current estimation timing are similar, it can be determined that fluctuation in a channel is little, so that a PMI to which a maximum channel capacity is allocated can be highly likely to be specified by calculating channel capacities of only PMIs included in PMI groups placed at upper places at the previous estimation timing. By contrast with this, when rank orders of groups different from previous rank orders are obtained, it can be determined that fluctuation in a channel is significant, so that it can be decided that PMIs may not be narrowed based on previous group rank orders and PMI ranks.

As illustrated in Fig. 9, in layer 1, rank orders of PMI groups at the previous estimation timings and rank orders based on channel capacities of representative PMIs are the same, so that it can be decided that fluctuation in a channel is little, and the PMI to which the maximum channel capacity is allocated can be specified by calculating only channel capacities of PMIs included in m*ₗ* = 1 PMI groups at upper places and, consequently, channel capacities of PMI = 12, 7, 4 and 2 included in PMIG_{1,1} are calculated.

In addition, PMI = 12 which is a representative PMI has already been calculated and therefore does not need to be calculated again. In case of layer 2 illustrated in Fig. 9, rank orders of PMI groups at the previous estimation timing and rank orders based on channel capacities of representative PMIs are different, and it is determined that fluctuation in a channel is not little and channel capacities of PMI = 6, 15, 11, 13, 4, 1, 7, 0, 3, 2, 5 and 9 are calculated for PMIs included in groups whose rank orders fluctuate as channel capacity calculation targets.

In step S52, the report PMI selecting unit 19 finishes processing of narrowing PMIs whose channel capacities are calculated based on a PMI to which a maximum channel capacity among channel capacities of PMIs finally calculated per layer is allocated as a PMI estimate.

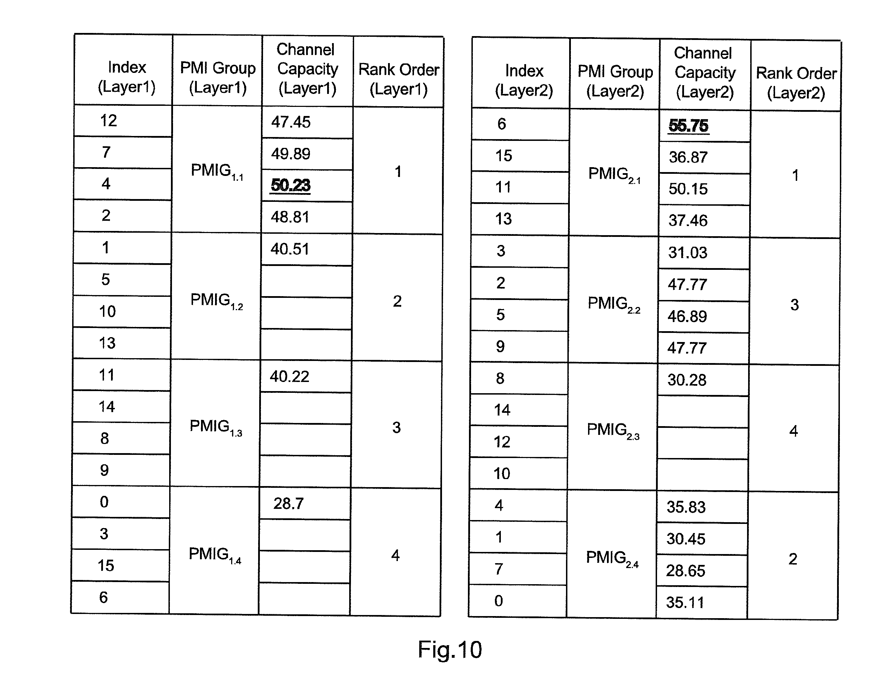

In case of Fig. 10, a channel capacity of 47.45 is calculated for the representative PMI of the index 12 in the PMI group PMIG_{1,1}, the channel capacity of 49.89 is calculated for a PMI of the index 7 in the PMI group PMIG_{1,1}, the channel capacity of 50.23 is calculated for the PMI of the index 4 in the PMI group PMIG_{1,1}, the channel capacity of 48.81 is calculated for the PMI of the index 2 in the PMI group PMIG_{1,1}, the channel capacity of 40.51 is calculated for the representative PMI of the index 1 in the PMI group PMIG_{1,2}, the channel capacity of 40.22 is calculated for the representative PMI of the index 11 in the PMI group PMIG_{1,3}, and the channel capacity of 28.7 is calculated for the representative PMI of the index 0 in the PMI group PMIG_{1,4}, so that a PMI of the index 4 to which a maximum channel capacity of 50.23 is allocated in layer 1 becomes a PMI estimate.

Further, the channel capacity of 55.75 is calculated for the representative PMI of the index 6 in the PMI group PMIG_{2,1}, the channel capacity of 36.87 is calculated for the PMI of the index 15 in the PMI group PMIG_{2,1}, the channel capacity of 50.15 is calculated for the PMI of the index 11 in the PMI group PMIG_{2,1}, and the channel capacity of 37.46 is calculated for the PMI of the index 13 in the PMI group PMIG_{2,1}. The channel capacity of 31.03 is calculated for the representative PMI of the index 3 in the PMI group PMIG_{2,2}, the channel capacity of 47.77 is calculated for the PMI of the index 2 in the PMI group PMIG_{2,2}, the channel capacity of 46.89 is calculated for the PMI of the index 5 in the PMI group PMIG_{2,2}, and the channel capacity of 47.77 is calculated for the PMI of the index 9 in the PMI group PMIG_{2,2}. Further, the channel capacity of 30.28 is calculated for the representative PMI of the index 8 in the PMI group PMIG_{2,3}. Furthermore, the channel capacity of 35.83 is calculated for the representative PMI of the index 4 in the PMI group PMIG_{2,4}, the channel capacity of 30.45 is calculated for the PMI of the index 1 in the PMI group PMIG_{2,4}, the channel capacity of 28.65 is calculated for the PMI 7 in the PMI group PMIG_{2,4}, and the channel capacity of 35.11 is calculated for the PMI of the index 0 in the PMI group PMIG_{2,4}. Hence, in layer 2, the PMI of the index 6 to which a maximum channel capacity of 55.75 is allocated is a PMI estimate.

Thus, the report PMI selecting unit 19 selects 4 as the PMI estimate in layer 1, and selects 6 as a PMI estimate in layer 2.

The closed loop processing of performing precoding processing based on the codebook is performed by calculating a channel capacity of each PMI included in the codebook based on a known signal received by a mobile station, specifying an optimal PMI based on channel capacities and notifying this value to a base station through an uplink channel. Generally, the mobile station performs PMI estimation by calculating channel capacities of all PMIs defined in the codebook and specifying the PMI to which the maximum channel capacity is allocated.

The channel capacity is an index value which reflects a state of a channel, and therefore when a channel fluctuates at a high speed, the channel capacity of each PMI is also highly likely to fluctuate at a high speed. By contrast with this, when a channel does not fluctuate at a high speed, it can be decided that a channel capacity of each PMI is also less likely to fluctuate. Consequently, when fluctuation in a channel is little, it is only necessary to calculate only channel capacities of PMIs to which higher communication capacities are allocated upon previous estimation.

Consequently, a mobile station device performs processing of rearranging channel capacity values of PMIs in ascending order every time PMI estimation processing is performed, performs processing of creasing some groups based on a rearrangement result and refers to and compares the results at the next estimation processing timing to follow a fluctuation situation of a channel, and, when it can be decided that fluctuation in a channel is little, narrows PMIs whose channel capacities are calculated, to only PMIs to which higher channel capacities are allocated at the previous estimation timing to perform processing matching a channel state, so that it is possible to reduce a power consumption amount related to PMI estimation.

In addition, the previous estimation result is used, so that, although, for example, rearrangement processing is performed, an operation for a new value to perform control is not performed.

The present embodiment is directed to estimating channel state information (CSI) and, more particularly, a precoding matrix indicator (PMI) used to perform adaptive link control used in a mobile communication system such as LTE (Long Term Evolution). Features of the present embodiment lie in reducing a power consumption amount related to PMI estimation without decreasing PMI estimation precision.

Upon closed loop processing accompanied by precoding processing based on a codebook such as LTE, the mobile station device according to the present embodiment can suppress power consumption related to estimation of PMIs which the mobile station needs to estimate. This is because accurate estimation processing can be performed by performing a required minimum operation to such a degree that estimation precision is not decreased by learning a fluctuation situation of channel capacities of PMIs calculated per PMI estimation timing and estimating a situation of a channel.

The mobile station device according to the present embodiment estimates a current channel state from past PMI estimation information and calculates a channel capacity of only a PMI to which a maximum channel capacity is highly likely to be allocated among PMIs included in the codebook, and, consequently, can reduce power consumption accompanying estimation of channel estimation information without deteriorating performance.

Thus, by narrowing channel capacities of PMIs which the mobile station calculates according to a channel state to such a degree that a beam forming effect is not decreased irrespectively of the number of PMIs included in the codebook, it is possible to reduce power consumption related to PMI estimation.

Although downlink reception according to LTE has been described above, the present invention is not limited to this, and is applicable to all wireless access methods using beam forming of a closed loop which uses precoding based on a codebook.

Although the number of PMIs included in all groups has been made equal upon formation of PMI groups above, the number of PMIs included in each group may not be the same. Similarly, although the number of representative PMIs is one, the number of representative PMIs is not limited to a value of one, and may take a value other than one. The number of representative PMIs is a parameter and is a value equal to or more than 0 and a maximum value thereof is the number of PMIs included in each group.

Further, when it can be decided that fluctuation occurs at a high speed, based on a measurement result of a Doppler frequency, upper control is also applicable, that is, for example, the above control is not performed.

The above series of processing can be executed by hardware and can also be executed by software. When a series of processing is executed by software, a computer program which configures this software is installed from a program recording medium to a computer which is embedded in dedicated hardware or a general-use personal computer which can execute various functions by installing various programs.

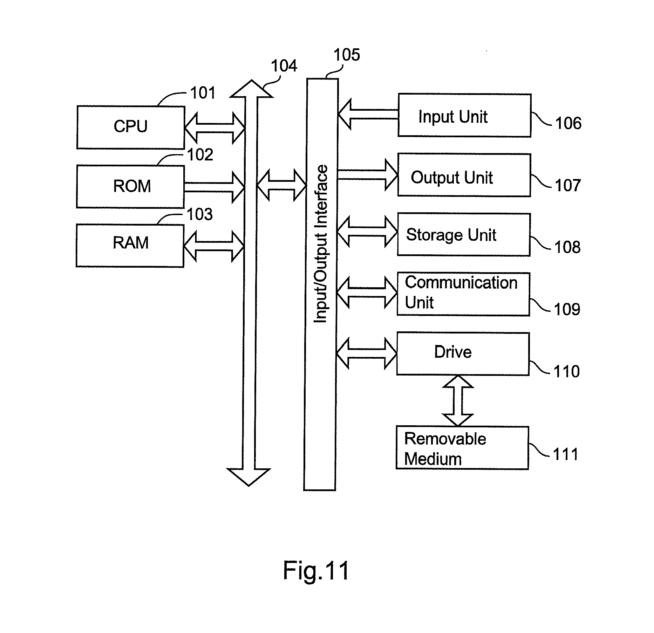

Fig. 11 is a block diagram illustrating a configuration example of hardware of the computer which executes the above series of processing according to the computer program.

In the computer, a CPU (Central Processing Unit) 101, a ROM (Read Only Memory) 102 and a RAM (Random Access Memory) 103 are mutually connected by a bus 104.

The bus 104 is further connected with an input/output interface 105. The input/output interface 105 is connected with an input unit 106 which includes a keyboard, a mouse and a microphone, an output unit 107 which includes a display and a speaker, a storage unit 108 which is a hard disk or a non-volatile memory, a communication unit 109 such as a network interface and a drive 110 which drives a removable medium 111 such as a magnetic disk, an optical disk, a magneto-optical disk or a semiconductor memory.

The computer configured as described above executes the above series of processing by causing the CPU 101 to load the computer program stored in the storage unit 108 to the RAM 103 through the input/output interface 105 and the bus 104 to execute.

The program to be executed by the computer (CPU 101) is recorded in the removable medium 111 such as a package medium including a magnetic disk (including a flexible disk), an optical disk (a CD-ROM (Compact Disc-Read Only Memory) or a DVD (Digital Versatile Disc)), a magnetooptical disk or a semiconductor memory, and is provided through a wired or wireless transmission medium such as a local area network, the Internet or digital satellite broadcasting.

Further, the computer program can be installed to the computer by attaching the removable medium 111 to the drive 110 and being stored in the storage unit 108 through the input/output interface 105. Furthermore, the computer program can be installed to the computer by being received by the communication unit 109 through a wired or wireless transmission medium and being stored in the storage unit 108. In addition, the computer program can be installed in the computer in advance by being stored in the ROM 102 or the storage unit 108 in advance.

In addition, a program to be executed by the computer may be a computer program which is executed in time series according to the order described in this description or may be a computer program executed in parallel or at a necessary timing when, for example, the program is invoked.

Further, the embodiment of the present invention is not limited to the above embodiment, and can be variously changed in a range which does not deviate from the spirit of the present invention.

### {Reference Signs List}

10 ... receiving antenna, 11 ... filter unit, 12 ... path search unit, 13 ... FFT unit, 14 ... demapping unit, 15 ... zero forcing unit, 16 ... power estimation unit, 17 ... channel estimation unit, 18 ... CSI estimation unit, 19 ... report PMI selecting unit, 20 ... SNR measuring unit, 21 ... initial channel capacity calculation unit, 22 ... channel capacity sorting unit, 23 ... PMI ranking unit, 24 ... PMI group dividing unit, 25 ... representative PMI selecting unit, 26 ... PMI information storage unit, 27 ... channel capacity calculation PMI determining unit, 28 ... channel capacity calculation unit, 101 ... CPU, 102 ... ROM, 103 ... RAM, 108 ... storage unit, 109 ... communication unit, 111 ... removable medium

## Claims

1. A mobile station device comprising:
a first calculation means of calculating for each of precoding matrix index groups consisting of a predetermined number of precoding matrix indices a channel capacity of a representative precoding matrix index which is a precoding matrix index representing the precoding matrix index group;
a sorting means of sorting the precoding matrix index groups in order of the channel capacity of the representative precoding matrix index;
a storage means which stores rank orders of the precoding matrix index groups sorted in order of the channel capacity;
a determining means of determines a precoding matrix index group in which channel capacities of precoding matrix indices other than the representative precoding matrix index are to be calculated, by comparing a rank order of a precoding matrix index group which is stored in the storage means and is obtained upon previous precoding processing, and a rank order of a precoding matrix index group which is obtained upon current precoding processing;
a second calculation means of calculating the channel capacities of the precoding matrix indices other than the representative precoding matrix index among the precoding matrix indices of the precoding matrix index group in which the channel capacities of the precoding matrix indices other than the representative precoding matrix index are determined by the determining means to be calculated; and
a selecting means of selecting as a precoding matrix index estimate the representative precoding matrix index or the precoding matrix indices from which the maximum channel capacity is calculated, from the representative precoding matrix index or the precoding matrix indices whose communication capacity is calculated by the first calculation means or the second calculation means.

2. The mobile station device according to claim 1, wherein the first calculation means and the second calculation means calculate channel capacities based on signal to noise ratios and channel estimates.

3. The mobile station device according to claim 1, wherein
the second calculation means calculates a channel capacity of each of all the precoding matrix indices upon first precoding processing;
the sorting means sorts all the precoding matrix indices in order of a channel capacity;
the mobile station device further comprises a means of generating the precoding matrix index groups by grouping the sorted precoding matrix indices into a predetermined number of precoding matrix indices; and
the storage means stores rank orders of the generated precoding matrix index groups.

4. The mobile station device according to claim 2, wherein:
the second calculation means calculates a channel capacity of each of all the precoding matrix indices upon first precoding processing;
the sorting means sorts all the precoding matrix indices in order of a channel capacity;
the mobile station device further comprises a means of generating the precoding matrix index groups by grouping the sorted precoding matrix indices into a predetermined number of precoding matrix indices; and
the storage means stores rank orders of the generated precoding matrix index groups.

5. The mobile station device according to claim 1, wherein, when the rank order of the precoding matrix index group upon the previous precoding processing and the rank order of the precoding matrix index group upon the current precoding processing are different, the determining means determines the precoding matrix index group as the precoding matrix index group whose channel capacities of the precoding matrix indices other than the representative precoding matrix index are calculated.

6. A communication method comprising:
a first calculation step of calculating for each of precoding matrix index groups which each comprise a predetermined number of precoding matrix indices a channel capacity of a representative precoding matrix index which is a precoding matrix index representing each precoding matrix index group;
a sorting step of sorting the precoding matrix index groups in order of the channel capacity of the representative precoding matrix index;
a storage step of storing rank orders of the precoding matrix index groups sorted in order of the channel capacity in a storage means;
a determining step of, by comparing a rank order of a precoding matrix index group which is stored in the storage means and is obtained upon previous precoding processing, and a rank order of a precoding matrix index group which is obtained upon current precoding processing, determining the precoding matrix index group in which channel capacities of precoding matrix indices other than the representative precoding matrix index are to be calculated;
a second calculation step of, among the precoding matrix indices of the precoding matrix index group in which the channel capacities of the precoding matrix indices other than the representative precoding matrix index are determined in the determining step to be calculated, calculating the channel capacities of the precoding matrix indices other than the representative precoding matrix index; and
a selecting step of selecting as a precoding matrix index estimate the representative precoding matrix index or the precoding matrix indices from which the maximum channel capacity is calculated, from the representative precoding matrix index or the precoding matrix indices whose communication capacity is calculated in the first calculation step or the second calculation step.

7. A computer program causing a computer to execute processing comprising:
a first calculation step of calculating for each of precoding matrix index groups which each comprise a predetermined number of precoding matrix indices a channel capacity of a representative precoding matrix index which is a precoding matrix index representing each precoding matrix index group;
a sorting step of sorting the precoding matrix index groups in order of the channel capacity of the representative precoding matrix index;
a storage step of storing rank orders of the precoding matrix index groups sorted in order of the channel capacity in a storage means;
a determining step of, by comparing a rank order of a precoding matrix index group which is stored in the storage means and is obtained upon previous precoding processing, and a rank order of a precoding matrix index group which is obtained upon current precoding processing, determining the precoding matrix index group in which channel capacities of precoding matrix indices other than the representative precoding matrix index are to be calculated;
a second calculation step of, among the precoding matrix indices of the precoding matrix index group in which the channel capacities of the precoding matrix indices other than the representative precoding matrix index are determined in the determining step to be calculated, calculating the channel capacities of the precoding matrix indices other than the representative precoding matrix index; and
a selecting step of selecting as a precoding matrix index estimate the representative precoding matrix index or the precoding matrix indices from which the maximum channel capacity is calculated, from the representative precoding matrix index or the precoding matrix indices whose channel capacity is calculated in the first calculation step or the second calculation step.
